# EUROPEAN PATENT SPECIFICATION

(11) **EP 3 631 352 B1**
(45) Date of publication and mention of the grant of the patent: **10.03.2021**
(21) Application number: 18730459.7
(22) Date of filing: 01.06.2018
(51) Int. Cl.: G01B 7/00, G01L 1/12, B62M 6/50, G01D 5/14, G01B 7/24, G01L 5/13

(54) **DISPLACEMENT MEASURING DEVICE**
VERSCHIEBUNGSMESSVORRICHTUNG
DISPOSITIF DE MESURE DE DÉPLACEMENT

(30) Priority: 02.06.2017 NL 1042415
(43) Date of publication of application: 08.04.2020
(73) Proprietor: IDbike B.V., 5133 NE Riel (NL)
(72) Inventor: D'HERRIPON, Bastiaan Andreas, 5053 EE Goirle (NL); MANNESSE, Mark Anthony, 5044 AS Tilburg (NL)
(74) Representative: Griebling, Onno
(86) International application number: PCT/NL2018/000009
(87) International publication number: WO 2018/222029

(56) References cited:
- WO-A1-2011/074947
- US-A1- 2008 034 896

## Description

### FIELD OF THE INVENTION

The present invention relates in general to force measuring devices.

For measuring forces, various measuring techniques can be used. Forces tend to cause deformation of an object on which the forces are exerted, and one measuring technique is to measure the deformation of the object concerned. Deformation of a contiguous or solid object can be measured for instance by strain gauges. A strain gauge actually measures the local change in length (stretching or shrinking) of the object. If the object comprises two portions with a gap in between, deformation can cause the two object portions to be displaced with respect to each other, and the mutual displacement of these two object portions can be measured as being proportional to the force exerted. On the other hand, it may also be desired to measure the relative displacement of two different objects.

The present invention particularly relates to a measuring device based on the principle of measuring a displacement.

### BACKGROUND OF THE INVENTION

In various technical fields, there is a desire to be able to measure a force. One particular field is the field of bicycles (or other human-driven vehicles), where it is desirable to measure the pedalling force exerted by the cyclist. For the purpose of background, reference is made to EP-1863700.

The measured signal can for instance be used to calculate the amount of energy consumed by the cyclist, but can also be used as an input signal for a control device of an auxiliary electric motor for assisting the cyclist. In the following, the invention will be explained particularly for the example of an electrically assisted bicycle, but it is noted that this explanation should not be interpreted as limiting the invention or its applicability.

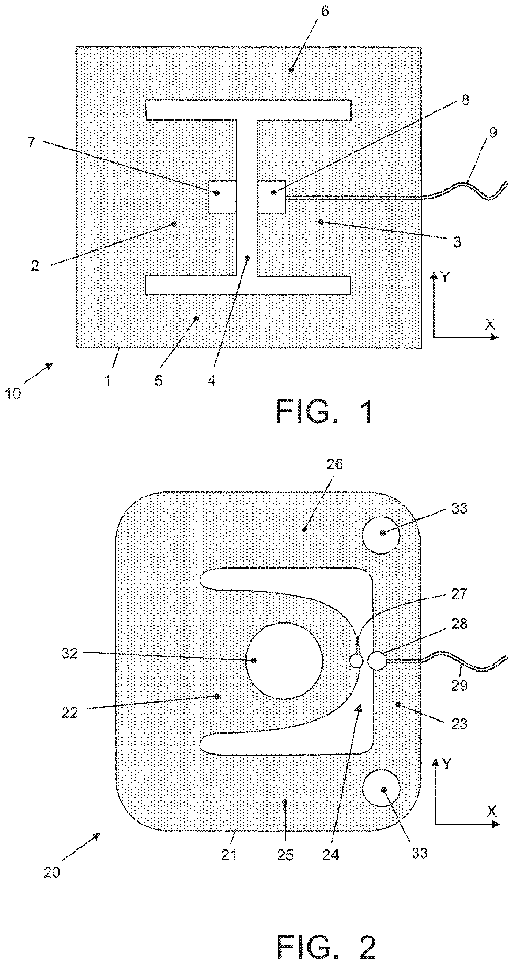

Figure 1 schematically illustrates the design of a displacement measuring device 10. It comprises a plate-shaped support basis 1, which is typically although not essentially manufactured from a solid plate of metal, typically aluminium, of a sufficient thickness, typically in the range of 3-10 mm. The support basis 1 comprises at least one gap 4 between two support portions 2 and 3. The width direction of the gap 4 will be indicated as X-direction, while the longitudinal direction of the gap 4 will be indicated as Y-direction. At opposite sides of the gap 4, two connecting legs 5 and 6 extend in X-direction, connecting the two support portions 2 and 3. The design in figure 1 is symmetrical, and the gap 4 is the central part of a generally H-shaped gap.

The support basis 1 comprises mounting holes for mounting the displacement measuring device 10 to an object such as a bicycle. These mounting holes are not shown for sake of simplicity. In some embodiments, the support basis 1 becomes part of the load-bearing frame of the bicycle.

If a force is exerted in X-direction, particularly the connecting legs 5 and 6 of the support basis 1 have sufficient stiffness to substantially prevent relative movement of the two support portions 2 and 3 in X-direction. It will be clear to a person skilled in the art that the stiffness of the connecting legs 5 and 6 in Y-direction is less, so that, in response to a force exerted in Y-direction, particularly the two support portions 2 and 3 will undergo some displacement with respect to each other in Y-direction. Likewise, in response to a force exerted in Z-direction perpendicular to the place of the support basis 1, or in response to a torque, the two support portions 2 and 3 will undergo some displacement with respect to each other in Y-direction and/or Z-direction. Comparatively, the two support portions 2 and 3 have a displacement freedom in Y-direction and Z-direction only. Obviously, the ratio between force and displacement will depend on the stiffness, and the stiffnesses in X-direction, Y-direction and Z-direction will inter alia depend on the shape of the various parts, on the choice of material and on the thickness of the material, of the support basis 1 and more particularly the connecting legs 5 and 6 thereof.

The displacement measuring device 10 further comprises a sensor unit 8 and input/output terminals 9 for providing an output signal of the sensor unit 8. The sensor unit 8 is mounted in one support portion 3 close to the gap 4 facing the opposite support portion 2. Reference numeral 7 indicates a reference unit mounted in the opposite support portion 2, close to the gap 4. A virtual line connecting the reference unit 7 and sensor unit 8 will be indicated as sensor orientation direction and is substantially equal to the X-direction.

The sensor unit 8 comprises the actual sensitive element mounted in a housing, while the reference unit 7 comprises an actual reference element mounted in a housing. The sensitive element (not shown for sake of simplicity) is sensitive to displacement of the reference element. In a preferred embodiment, the sensitive element is a Hall-sensor and the reference element is a magnet. Since Hall-sensors and their operation are generally known, and are commercially available, a more detailed description thereof is omitted here.

A challenge of the displacement measuring device 10 is the manufacture. In order to be able to accurately measure small displacements, the X-distance between the Hall-sensor and the magnet should be small. For this reason, the gap 4 is typically manufactured as a narrow gap, with a width of less than 1 mm, but this requires complicated and expensive techniques. For placing the components 7 and 8, a recess is machined in a main surface of the support basis 1.

Further, the Hall-sensor and the magnet should be positioned very accurately with respect to each other. It is customary that first the magnet unit 7 is attached, and that then the Hall-unit 8 is brought in position. The support basis 1 allows for some linear displacement of the Hall-unit 8 in a direction perpendicular to the X-direction. Positioning is done while an output signal is obtained, which is monitored, and positioning is considered optimal if the output signal has a certain target value. Then, the Hall-unit 8 is fixated, typically with quick-working glue. This is however tedious, and the accuracy obtained is not optimal.

There are also proposals where the Hall-sensor and the magnet are first mounted together on a subframe, which is then attached to the support basis 1, but this brings the problem of tolerances of mounting the Hall-sensor and the magnet onto the subframe and of attaching the subframe to the support basis 1.

Document US-2008/0034896 discloses a measuring device having a complicated design, including a bending bar and a cylindrical sleeve. The bending bar has two bending legs extending parallel to each other in longitudinal direction, and meet each other in a base portion. In the base portion, a longitudinal magnet chamber is arranged between the two legs. The sleeve has a radial hole. First, an elongate magnet is introduced axially and fixated in said magnet chamber. Then the sleeve is arranged around the bar and welded to the bar. Finally, a sensor unit is arranged in the radial hole of the sleeve, carrying a Hall-sensor that will be positioned between the two legs of the bar, close to the projecting end of the elongate magnet. The sensor unit is rotated about its rotation axis, that extends radially with respect to the bending bar, to find a position where the output signal is zero, and is then fixated.

A disadvantage of this known measuring device is the necessity to rotate the sensor unit, which needs to communicate a measuring signal to the outside world. But even more importantly, a disadvantage is that the two accommodation holes for the functional elements of the measuring device, i.e. the magnet and the sensor, are made in separate components, i.e. the bar and the sleeve, that are to be joined later by welding. Apart from being costly, this makes it very difficult to achieve high accuracy in the relative positioning between magnet and sensor.

### SUMMARY OF THE INVENTION

An object of the present invention is to provide a design of and manufacturing method for a displacement measuring device 10, that allow for easier and more cost-efficient assembly, that allow a positioning precision to be achieved in an easier and more convenient manner, and that particularly allow a simpler and more accurate adjustability to be possible. The invention provides a method according to claim 1 for manufacturing a displacement measuring device, a displacement measuring device according to claim 8, and an adjustment device according to claim 13.

According to a first aspect of the present invention, the magnet is included in a rotatable magnet unit, the Hall-sensor unit 8 is attached first, and then the positioning of the magnet unit 7 is adjusted and fixated. It is easier to manipulate the positioning of the magnet unit 7 in view of the wires 9 attached to the Hall-sensor unit 8.

According to a second aspect of the present invention, accommodation holes in the plate-shaped support basis for the magnet unit and the sensor unit, respectively, are round accommodation holes having their axial direction in Z-direction perpendicular to the X-direction and Y-direction, i.e. perpendicular to the plane of the plate-shaped support basis. These holes can easily and accurately be made by drilling or punching or the like, in the plate-shaped support basis 1, with the drilling direction or punching direction being directed in Z-direction perpendicular to the X-direction and Y-direction. Making a hole in this way is relatively easy and accurate as far as diameter, direction and positioning are concerned. It is to be noted that the two holes are made in the two support portions that are integral parts of the same plate, so their relative positioning is and remains accurate. The Hall-sensor unit 8 is placed in its corresponding hole, using an insertion in Z-direction, and is fixated by glue or the like. The magnet unit 7 is placed in its corresponding hole, using an insertion in Z-direction. The magnet in the magnet unit 7 is located eccentrically, close to the surface. When inserting the magnet unit 7, the unit is roughly positioned in the correct orientation, which has low accuracy. Subsequently, the magnet unit 7 is rotated about the Z-axis, which causes, at the surface portion directed towards the Hall-sensor unit 8, a displacement in Y-direction. Simultaneously, the output signal of the Hall-sensor unit 8 is monitored, and the angular orientation of the magnet unit 7 is adjusted so that the output signal has a certain target value within a certain tolerance. Since the magnet unit 7 is already held within its corresponding hole, varying the angular orientation is relatively easy. In fact, it is possible to interrupt the adjustment procedure and to later resume or improve it. Any manufacturing tolerances in the holes and any tolerances in the positioning of the Hall-sensor unit 8 can thus be compensated, but they will already be smaller as compared to the prior art design of US-2008/0034896.

According to a third aspect of the present invention, the central axes of the accommodation holes are located at a distance from the edge of the gap 4 smaller than the radius of such hole. Thus, each accommodation hole opens into the gap, and the magnet unit 7 and sensor unit 8 project into the gap. Thus, the mutual distance between the magnet unit 7 and sensor unit 8 can be much smaller than the gap width. Conversely, the gap 4 may have a substantial width of for instance 3-5 mm, and the accuracy of the width of gap 4 is less important, so that the gap is much easier and more cost-efficient to make with traditional techniques such as milling or punching.

The accommodation holes may be made before the gap is cut. Also, the accommodation holes may be cut, in the same process that cuts the gap.

### BRIEF DESCRIPTION OF THE DRAWINGS

These and other aspects, features and advantages of the present invention will be further explained by the following description of one or more preferred embodiments with reference to the drawings, in which same reference numerals indicate same or similar parts, and in which:
figure 1 schematically illustrates a displacement measuring device;
figure 2 schematically illustrates an embodiment of a displacement measuring device according to the present invention;
figure 3 schematically illustrates details of the displacement measuring device on a larger scale;
figures 4A - 4C illustrate details of possible shapes of a magnet housing and the corresponding accommodation hole;
figures 5A and 5B are schematic perspective views of an embodiment of a magnet unit;
figure 6 is a schematic block diagram of a device for adjusting the magnet housing; figures 7A - 7C illustrate a possible radial adjustment of the position of a magnet in the magnet housing.

### DETAILED DESCRIPTION OF THE INVENTION

Figure 2 schematically illustrates an embodiment of a displacement measuring device 20 according to the present invention, suitable for use as a force measuring device in an electrically assisted bicycle. Reference numerals in the range from 21-29 indicate same or similar parts as the parts with reference numerals in the range from 1-9 discussed in the above with reference to figure 1. Reference numerals 33 indicate mounting holes for passing screws for attaching one support portion 23 to the frame of such bicycle. Reference numeral 32 indicates a mounting hole for attaching the opposite support portion 22 to an axle of a driven wheel. If the cyclist pushes the pedals, driving force in the drive train (typically a chain) will exert a force on the driven wheel, causing the axle of the driven wheel (typically the rear wheel) to be displaced somewhat with respect to the bicycle frame, causing in turn a displacement of support portions 22 and 23 with respect to each other, mainly in a direction perpendicular to the X-direction, which is the direction of a vitual line line connecting the magnet and the sensor.

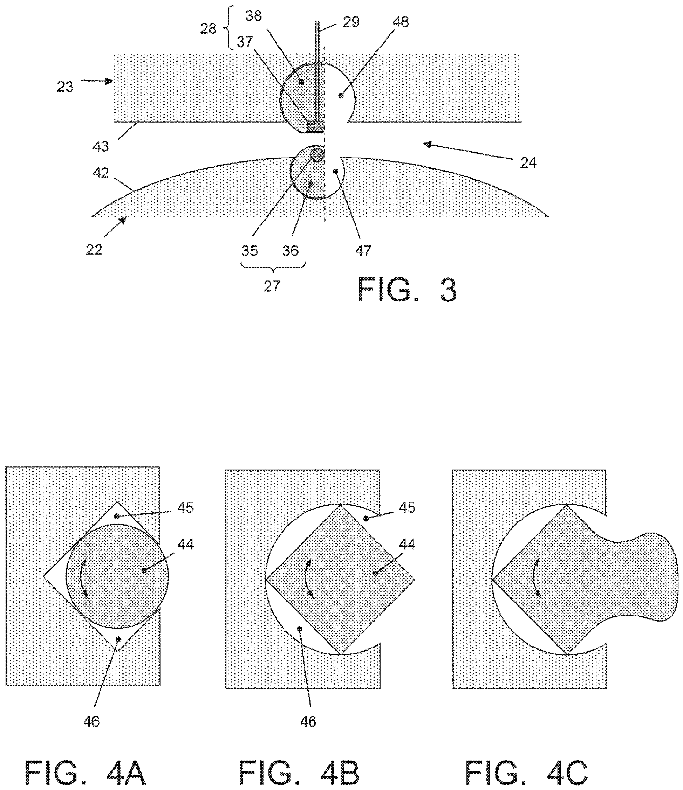

Figure 3 schematically illustrates details of the displacement measuring device 20 on a larger scale. Reference numeral 42 indicates an edge of the plate-shaped support portion 22. Reference numeral 43 indicates an edge of the plate-shaped support portion 23. Reference numeral 47 indicates a round accommodation hole for accommodating a magnet unit 27. Reference numeral 48 indicates a round accommodation hole for accommodating a Hall-sensor unit 28. Said holes have their axial directions in the Z-direction, i.e. perpendicular to the plane of the drawing. At the lefthand side of the dotted line, the magnet unit 27 is shown with a magnet 35 in a magnet housing 36, and the sensor unit 28 is shown with a Hall-sensor 37 in a sensor housing 38, while at the righthand side of the dotted line the respective accommodation holes 47, 48 are shown empty. It can be seen that the accommodation holes 47, 48 are open towards the gap 24 and that the magnet unit 27 and Hall-sensor unit 28 project into the gap 24 so that their mutual distance is smaller than the width of gap 24. The accommodation holes 47, 48 may have mutually identical diameter, but that is not critical.

Inserting the magnet unit 27 and the sensor unit 28 into the respective holes 47 and 48 is advantageously done by a linear, axial movement in the Z-direction.

At least one of the sensor components 27, 28 is held with a rotational freedom within the corresponding accommodation hole 47, 48. This will in in any case apply to the magnet unit 27 in its corresponding accommodation hole 47, but the same may apply to the Hall-sensor unit 28.

For being held with rotational freedom, it is not essential that the unit and the hole have rotational symmetry. Figure 4A illustrates that a round unit 44 has rotational freedom in a square hole 45. Figure 4B illustrates that a square unit 44 has rotational freedom in a round hole 45. Further, rotational freedom in the sense of the present invention does not require rotational freedom over 360°. For the required adjustment purposes, a rotational freedom of 20° will generally be more than sufficient. This in turn means that a portion of the unit projecting into the gap 24, through the "mouth" of the accommodation hole, does not even need to fit inside that accommodation hole, as illustrated in figure 4C in an exaggerated manner.

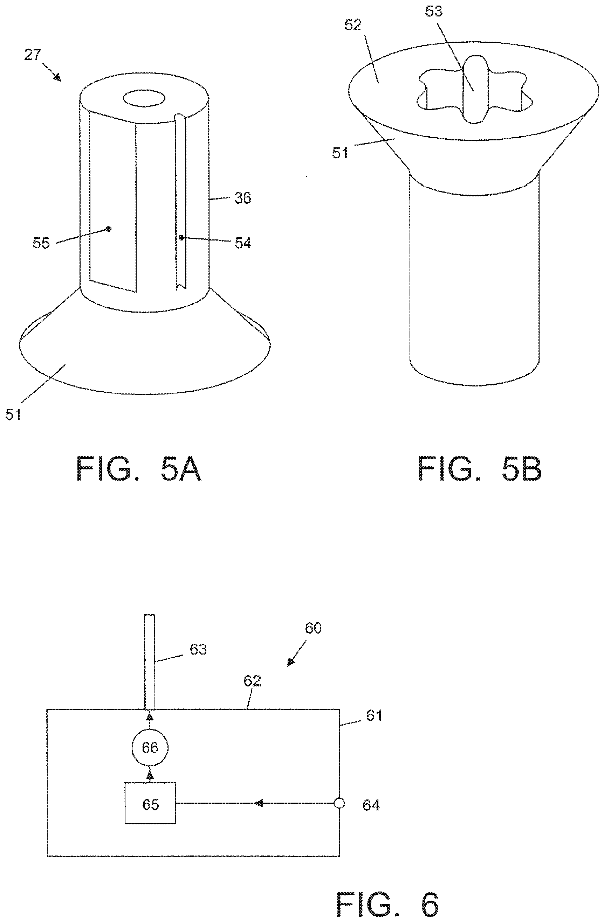

Figure 5A is a schematic perspective view of an embodiment of a magnet unit 27 according to the present invention. The magnet unit 27 comprises a magnet housing 36 which in this example has a circular-cylindrical cross-section. The magnet housing 36 may be made from a suitable plastic material or any other suitable material. The magnet arranged in the magnet housing 36 is not shown for sake of simplicity.

In an embodiment, at one end, the magnet housing 36 has a flange 51, preferably and as shown a tapered flange. The corresponding accommodation hole 47 may be provided with a similar tapered entrance portion. On insertion of the magnet housing 36 in its corresponding accommodation hole 47, these tapered portions cooperate to provide an axial stop such as to ensure a correct axial positioning. It should be clear that such "stop function" can also be achieved with different shapes.

In one head face 52, which in this example is the head face associated with the tapered flange 51, a contoured recess 53 allows engagement of a tool for rotating the magnet housing 36, as can be seen in the schematic perspective view of figure 5B. This preferably is a recess with a 6-point star-shaped contour ("torx"). The opposite head face is indicated at reference numeral 56.

Figure 6 is a schematic block diagram of a device 60 for inserting and adjusting the magnet housing 36. The device 60 comprises a support 61 with a top surface 62, and a tool 63 extending upright from that top surface 62, having a contour matching the contour of recess 53. A worker places a magnet housing 36 (already provided with a magnet) on the tool 63, so that tool 63 and recess 53 engage each other. The worker then takes the support basis 1 of the measuring device 10, aligns the accommodation hole 47 with the magnet housing 36, and gently pushes down such that the magnet housing 36 enters the accommodation hole 47 until flange 51 hits the support 61. Alternatively, it is possible that the worker first pushes the magnet housing 36 into the accommodation hole 47 and then makes the recess 53 engage the tool 63. The worker preferably ensures visually that the angular orientation of the magnet housing 36 is about right, but a tolerance in the order of 1 mm (measured at the circumference of the magnet housing 36) is acceptable. The input/output terminals 29 of the measuring device 10 are connected to an interface 64 of device 60, which interface is coupled to a control device 65 that controls a motor 66 for rotating the tool 63. While constantly receiving the measuring output signal from the Hall sensor, the control device 65 adjusts the rotational position of the magnet housing 36 such that the value of the measuring output signal from the Hall sensor is equal to a predetermined desired value within a predetermined accuracy range, typically better than 0.1 %. Assuming similar measuring behaviour of different measuring devices, this ensures that the measuring signals provided as output will very accurately correspond to a certain mechanical deformation of the support basis 21.

Having reached this position, the control device 65 holds the tool 63 still and gives a signal to the worker, who will then apply rapid-working glue to fixate the magnet housing 36 in position. In a fully automated version, the device 60 is provided with a glue applicator (not shown) controlled by the control device 65. The glue will be applied to the magnet housing 36 that is visible in the device 60, which in this embodiment is the side opposite the flange 51.

The glue is to attach the magnet housing 36 to the support basis 1. To this end, the glue (which is applied in liquid condition) must be able to flow between the wall of the magnet housing 36 and the wall of the accommodation hole 47. If both the magnet housing 36 and the accommodation hole 47 have a circular contour over their entire axial length, it will be difficult to ensure adequate application of glue.

To overcome this problem, axial or spiral grooves 54 may be applied in the outer surface of the magnet housing 36 and/or in the wall of the accommodation hole 47. The preferred solution is to apply such grooves 54 in the outer surface of the magnet housing 36, as shown in figure 5A.

If the magnet housing 36 or the accommodation hole 47 has a non-circular contour, it may be unnecessary to apply such grooves. In the above, with reference to figures 4A and 4B, it was explained that these components do not have to have circular symmetry. For instance, if the magnet housing 36 has flat surface portions 55 (figure 5A), or even has a square cross-section (figure 4B), or hexagonal or octagonal cross-section (not shown), there will automatically be spaces 45 left between the magnet housing 36 and the accommodation hole 47, which spaces can be filled with the glue.

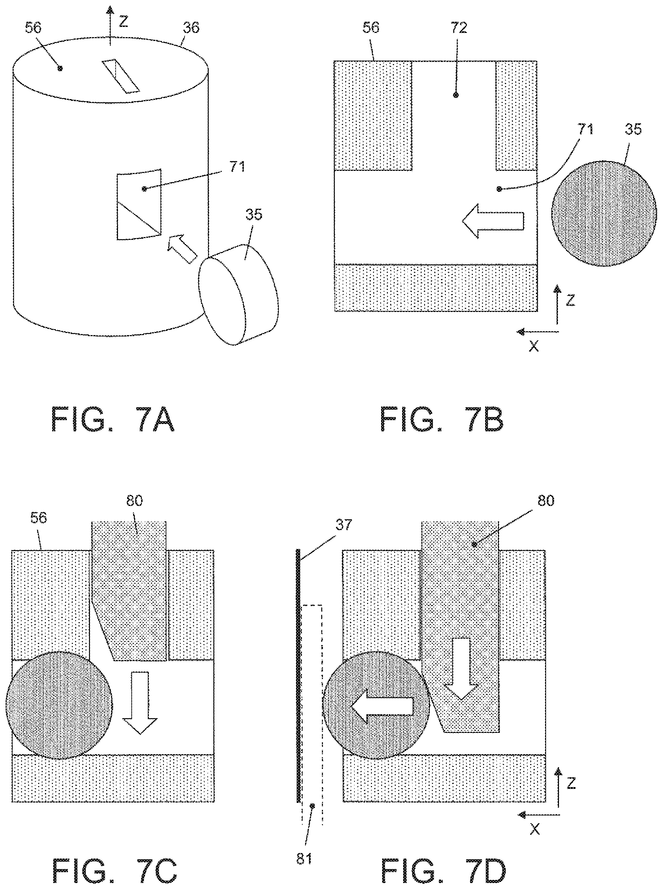

Figures 7A-7D schematically illustrate a radial adjustment of the magnet 35 within the magnet housing 36 according to the present invention. The magnet housing 36 is shown as being a solid cylinder with its central axis aligned with the Z-axis (vertical). Perpendicular to the central axis, a magnet chamber 71 extends through the magnet housing 36, from side wall to side wall. Parallel to the central axis, a tool chamber 72 extends through the magnet housing 36, from top surface 56 to the magnet chamber 71.

In a first mounting step, the magnet 35 is pushed sideways into the magnet housing 36, i.e. into the magnet chamber 71 (figures 7A and 7B) to reach a certain positional "depth" within the magnet chamber 71, illustrated in figure 7C. This position, which notably is past the tool chamber 72, may be more or less accurate. The figure shows, in exaggerated manner, that the size of the magnet chamber 71 may be slightly smaller than the size of the magnet 35, so that the magnet 35 is clamped in place by the magnet chamber 71.

With the magnet 35 in this position, the magnet housing 36 is inserted into its accommodation hole 47 as described above. Now a tapered adjustment tool 80 is inserted down into the tool chamber 72, as shown in figures 7C and 7D. The tapered front of the adjustment tool 80 engages the magnet 35 and pushes it further in X-direction towards the Hall sensor 37, here schematically represented as a solid line. A reference tool 81 of calibrated thickness, here schematically represented in dotted lines, may be held in front of the Hall sensor 37 to ensure that the magnet 35 is pushed to a calibrated distance from the Hall sensor 37.

The adjustment tool 80 is now removed, and glue is applied into the tool chamber 72. The glue will engage the magnet 35 to secure it in place. The glue will also run through the magnet chamber 71 and engage the accommodation hole 47 to secure the magnet housing 36 in place.

It should be clear to a person skilled in the art that the present invention is not limited to the exemplary embodiments discussed above, but that several variations and modifications are possible within the protective scope of the invention as defined in the appending claims. For instance, the step of fixating the sensor unit may be performed before or after adjusting the positioning of the reference unit.

Even if certain features are recited in different dependent claims, the present invention also relates to an embodiment comprising these features in common. Even if certain features have been described in combination with each other, the present invention also relates to an embodiment in which one or more of these features are omitted. Features which have not been explicitly described as being essential may also be omitted. Any reference signs in a claim should not be construed as limiting the scope of that claim. The invention is defined in the appending claims.

It should particularly be clear to persons skilled in the art that the measuring device proposed by the present invention essentially consists of two elements, which in the example discussed are a Hall-sensor and a magnet, and that the measuring device is essentially sensitive to displacement of one element with respect to the other, because the output signal of the device depends on, and in first approximation is proportional to, such displacement. For this reason, the measuring device will be indicated as a displacement measuring device. However, such displacement may be caused by external influences, such as a force, so that the output signal is indicative of such external influence and the measuring device may be indicated as a measuring device for such external influence.

## Claims

1. Method for manufacturing a displacement measuring device (20), the method comprising the steps of:
- providing a plate-shaped support basis (21) including two support portions (22, 23) separated by a gap (24), the support basis (21) being deformable such that the two support portions (22, 23) are displaceable with respect to each other;
- arranging a first round accommodation space (47) in a first one (22) of said two support portions, adjacent said gap (24), perpendicular to the plate-shaped support basis;
- arranging a second round accommodation space (48) in a second one (23) of said two support portions, adjacent said gap (24), perpendicular to the plate-shaped support basis, wherein a virtual line connecting the first accommodation space (47) and second accommodation space (48) defines a sensor orientation direction (X);
- providing a sensor system (27, 28) that comprises a sensor unit (28) and a reference unit (27), wherein
-- the sensor unit (28) comprises a sensor housing (38) and a sensing element (37) mounted in the sensor housing, and
-- the reference unit (27) comprises a reference housing (36) and a sensor reference element (35) mounted eccentrically in the reference housing;
- inserting the reference unit (27) into the first accommodation space (47) with an insertion displacement direction (Z) perpendicular to said sensor orientation direction (X) and perpendicular to the plate-shaped support basis;
- placing the sensor unit (28) into the second accommodation space (48) with an insertion displacement direction (Z) perpendicular to said sensor orientation direction (X) and perpendicular to the plate-shaped support basis;
- adjusting the positioning of the sensor system (27, 28) by rotation of the reference housing (36) about its corresponding rotation axis in the first round accommodation space (47);
- fixating the reference unit (27) and the sensor unit (28) in their corresponding accommodation spaces;

2. Method according to claim 1, wherein the sensing element comprises a Hall-sensor and wherein the reference element comprises a magnet.

3. Method according to any of the previous claims, wherein the first accommodation space (47) and the second accommodation space (48) are open toward said gap (24).

4. Method according to any of the previous claims, wherein the reference unit (27) and/or the sensor unit (28) projects from the corresponding support portion (22, 23) into said gap (24).

5. Method according to any of the previous claims, wherein the step of adjusting the positioning of the sensor system (27, 28) comprises the step of radially displacing the reference element with respect to the reference housing.

6. Method according to claim 5, wherein the step of radially displacing the reference element comprises the step of axially inserting a tapered tool into the reference housing.

7. Method according to any of the previous claims, wherein the step of adjusting the positioning of the sensor system (27, 28) is performed while monitoring an output signal of the sensor unit (28), and wherein the rotational position of the reference unit (27) is set such that the output signal of the sensor unit (28) has a predetermined target value.

8. Displacement measuring device (20) with a sensor system (27, 28), the measuring device comprising:
- a plate-shaped support basis (21) including two support portions (22, 23) separated by a gap (24), the support basis (21) being deformable such that the two support portions (22, 23) are displaceable with respect to each other;
- wherein a first one (22) of said two support portions has a first round accommodation space (47) adjacent said gap (24), perpendicular to the plate-shaped support basis;
- wherein a second one (23) of said two support portions has a second round accommodation space (48) adjacent said gap (24), perpendicular to the plate-shaped support basis, wherein a virtual line connecting the first accommodation space (47) and second accommodation space (48) defines a sensor orientation direction (X);
- wherein the sensor system (27, 28) comprises a sensor unit (28) and a reference unit (27), the sensor unit (28) comprises a sensor housing (38) and a sensing element (37) mounted in the sensor housing and the reference unit (27) comprises a reference housing (36) and a sensor reference element (35) mounted eccentrically in the reference housing;
- wherein the reference unit (27) is arranged in said first accommodation space (47);
- wherein the sensor unit (28) is arranged in said second accommodation space (48);
- wherein the first accommodation space (47) and the reference unit (27) are shaped such that the reference unit (27) has rotational freedom within the corresponding accommodation space (47) about a rotation axis (Z) perpendicular to said sensor orientation direction (X).

9. Displacement measuring device according to claim 8, wherein the sensing element comprises a Hall-sensor and wherein the reference element comprises a magnet.

10. Displacement measuring device according to any of the previous claims 8-9, wherein the first accommodation space (47) and the second accommodation space (48) are open toward said gap (24).

11. Displacement measuring device according to any of the previous claims 8-10, wherein the reference unit (27) and/or the sensor unit (28) projects from the corresponding support portion (22, 23) into said gap (24).

12. Force measuring device comprising a displacement measuring device (20) according to any of claims 8-11 , the force measuring device being responsive to an external force by a displacement of the two support portions (22, 23) with respect to each other.

13. Adjustment device for adjusting the position of a housing (36) of a reference unit (27) of a displacement measuring device (20) according to any of claims 8-11, comprising a support (61) with a top surface (62), and a tool (63) extending upright from that top surface (62) and having a contour adapted to engage said housing (36);
a motor (66) for rotating the tool (63);
a control device (65) for controlling the motor (66);
an interface (64) coupled to said control device (65) and adapted for receiving an output signal from the displacement measuring device;
wherein the control device (65) is adapted to monitor the received measuring output signal from the displacement measuring device and to control the motor (66) such that the tool (63) is brought to a rotational position where said received measuring output signal from the displacement measuring device has a predetermined desired value.

14. Human-driven vehicle with an auxiliary electric motor for providing assisting driving power related to the driving power provided by the human driver, the vehicle comprising a force measuring system for measuring the driving power provided by the human driver, said force measuring system comprising a displacement measuring device according to any of claims 8-11 or a force measuring device according to claim 12.

15. Vehicle according to claim 14, the vehicle being a bicycle.

## Patentansprüche

1. Verfahren zur Herstellung einer Verschiebungsmessvorrichtung (20), wobei das Verfahren die folgenden Schritte umfasst:
- Bereitstellen einer plattenförmigen Trägerbasis (21) mit zwei Trägerabschnitten (22, 23), die durch einen Spalt (24) getrennt sind, wobei die Trägerbasis (21) so verformbar ist, dass die beiden Trägerabschnitte (22, 23) gegeneinander verschiebbar sind;
- Anordnen eines ersten runden Aufnahmeraums (47) in einem ersten (22) der beiden Trägerabschnitte, angrenzend an den Spalt (24), senkrecht zu der plattenförmigen Trägerbasis;
- Anordnen eines zweiten runden Aufnahmeraums (48) in einem zweiten (23) der beiden Trägerabschnitte, angrenzend an den Spalt (24), senkrecht zu der plattenförmigen Trägerbasis, wobei eine virtuelle Linie, die den ersten Aufnahmeraum (47) und den zweiten Aufnahmeraum (48) verbindet, eine Sensororientierungsrichtung (X) definiert;
- Bereitstellen eines Sensorsystems (27, 28), das eine Sensoreinheit (28) und eine Referenzeinheit (27) umfasst, wobei
- die Sensoreinheit (28) ein Sensorgehäuse (38) und ein Sensorelement (27) umfasst, das in dem Sensorgehäuse angebracht ist und
- die Referenzeinheit (27) ein Referenzgehäuse (36) und ein Sensor-Referenzelement (35) umfasst, das exzentrisch im Referenzgehäuse angebracht ist;
- Einsetzen der Referenzeinheit (27) in den ersten Aufnahmeraum (47) mit einer Einsetzverschiebungsrichtung (Z) senkrecht zu der Sensororientierungsrichtung (X) und senkrecht zu der plattenförmigen Trägerbasis;
- Platzieren der Sensoreinheit (28) in den zweiten Aufnahmeraum (48) mit einer Einschubverschiebungsrichtung (Z) senkrecht zu der Sensororientierungsrichtung (X) und senkrecht zu der plattenförmigen Trägerbasis;
- Einstellen der Positionierung des Sensorsystems (27, 28) durch Drehen des Referenzgehäuses (36) um seine entsprechende Drehachse im ersten runden Aufnahmeraum (47);
- Fixierung der Referenzeinheit (27) und der Sensoreinheit (28) in ihren entsprechenden Aufnahmeräumen.

2. Verfahren nach Anspruch 1, wobei das Sensorelement einen Hallsensor umfasst und wobei das Referenzelement einen Magneten umfasst.

3. Verfahren nach einem der vorhergehenden Ansprüche, wobei der erste Aufnahmeraum (47) und der zweite Aufnahmeraum (48) zu dem Spalt (24) hin offen sind.

4. Verfahren nach einem der vorhergehenden Ansprüche, wobei die Referenzeinheit (27) und/oder die Sensoreinheit (28) von dem entsprechenden Trägerabschnitt (22, 23) in den Spalt (24) hineinragt.

5. Verfahren nach einem der vorhergehenden Ansprüche, wobei der Schritt des Einstellens der Positionierung des Sensorsystems (27, 28) den Schritt des radialen Verschiebens des Referenzelements in Bezug auf das Referenzgehäuse umfasst.

6. Verfahren nach Anspruch 5, wobei der Schritt des radialen Verschiebens des Referenzelements den Schritt des axialen Einführens eines kegelförmigen Werkzeugs in das Referenzgehäuse umfasst.

7. Verfahren nach einem der vorhergehenden Ansprüche, wobei der Schritt des Einstellens der Positionierung des Sensorsystems (27, 28) durchgeführt wird, während ein Ausgangssignal der Sensoreinheit (28) überwacht wird, und wobei die Drehposition der Referenzeinheit (27) so eingestellt wird, dass das Ausgangssignal der Sensoreinheit (28) einen vorbestimmten Zielwert hat.

8. Verschiebungsmessvorrichtung (20) mit einem Sensorsystem (27, 28), wobei die Messvorrichtung umfasst:
- eine plattenförmige Trägerbasis (21) mit zwei Trägerabschnitten (22, 23), die durch einen Spalt (24) getrennt sind, wobei die Trägerbasis (21) derart verformbar ist, dass die beiden Trägerabschnitte (22, 23) gegeneinander verschiebbar sind;
- wobei ein erster (22) der beiden Trägerabschnitte einen ersten runden Aufnahmeraum (47) angrenzend an den Spalt (24) aufweist, der senkrecht zur plattenförmigen Trägerbasis verläuft;
- wobei ein zweiter (23) der beiden Trägerabschnitte einen zweiten runden Aufnahmeraum (48) angrenzend an den Spalt (24) senkrecht zur plattenförmigen Trägerbasis aufweist, wobei eine virtuelle Linie, die den ersten Aufnahmeraum (47) und den zweiten Aufnahmeraum (48) verbindet, eine Sensororientierungsrichtung (X) definiert;
- wobei das Sensorsystem (27, 28) eine Sensoreinheit (28) und eine Referenzeinheit (27) umfasst, wobei die Sensoreinheit (28) ein Sensorgehäuse (38) und ein in dem Sensorgehäuse angebrachtes Sensorelement (37) umfasst und die Referenzeinheit (27) ein Referenzgehäuse (36) und ein exzentrisch in dem Referenzgehäuse angebrachtes Sensor Referenzelement (35) umfasst;
- wobei die Referenzeinheit (27) in dem ersten Aufnahmeraum (47) angeordnet ist;
- wobei die Sensoreinheit (28) in dem zweiten Aufnahmeraum (48) angeordnet ist;
- wobei der erste Aufnahmeraum (47) und die Referenzeinheit (27) so geformt sind, dass die Referenzeinheit (27) innerhalb des entsprechenden Aufnahmeraums (47) Rotationsfreiheit um eine Rotationsachse (2) senkrecht zu der Sensororientierungsrichtung (X) hat.

9. Verschiebungsmessvorrichtung nach Anspruch 8, wobei das Sensorelement einen Hall-Sensor umfasst und wobei das Referenzelement einen Magneten umfasst.

10. Verschiebungsmessvorrichtung nach einem der vorhergehenden Ansprüche 8-9, wobei der erste Aufnahmeraum (47) und der zweite Aufnahmeraum (48) zu dem Spalt (24) hin offen sind.

11. Verschiebungsmessvorrichtung nach einem der vorhergehenden Ansprüche 8-10, wobei die Referenzeinheit (27) und/oder die Sensoreinheit (28) von dem entsprechenden Trägerabschnitt (22, 23) in den Spalt (24) hineinragt.

12. Kraftmessvorrichtung umfassend eine Verschiebungsmessvorrichtung (20) nach einem der Ansprüche 8-11, wobei die Kraftmessevorrichtung ansprechbar ist auf eine äußere Kraft durch eine Verschiebung der beiden Trägerabschnitte (22, 23) gegeneinander.

13. Verstellvorrichtung zum Einstellen der Position eines Gehäuses (36) einer Referenzeinheit (27) von einer Verschiebungsmessvorrichtung (20) nach einem der Ansprüche 8-11, die einen Träger (61) mit einer oberen Fläche (62) und ein Werkzeug (63) umfasst, das sich von dieser oberen Fläche (62) senkrecht erstreckt und eine Kontur aufweist, die geeignet ist, mit dem Gehäuse (36) in Eingriff zu kommen;
einen Motor (66) zum Drehen des Werkzeugs (63);
eine Steuervorrichtung (65) zur Steuerung des Motors (66);
eine Schnittstelle (64), die mit der Steuervorrichtung (65) gekoppelt ist und geeignet ist ein Ausgangssignal von der Verschiebungsmessvorrichtung zu empfangen; wobei die Steuervorrichtung (65) geeignet ist, das empfangene Messausgangssignal von der Verschiebungsmessvorrichtung zu überwachen und den Motor (66) so zu steuern, dass das Werkzeug (63) in eine Drehposition gebracht wird, in der das empfangene Messausgangssignal von der Verschiebungsmessvorrichtung einen vorbestimmten Sollwert hat.

14. Von einem Menschen angetriebenes Fahrzeug mit einem Hilfselektromotor zur Bereitstellung einer unterstützenden Antriebsleistung, die mit der vom menschlichen Fahrer bereitgestellten Antriebsleistung in Beziehung steht, wobei das Fahrzeug ein Kraftmesssystem zur Messung der vom menschlichen Fahrer bereitgestellten Antriebsleistung umfasst, wobei das Kraftmesssystem eine Verschiebungsmessvorrichtung nach einem der Ansprüche 8-11 oder eine Kraftmessvorrichtung nach Anspruch 12 umfasst.

15. Fahrzeug nach Anspruch 14, wobei das Fahrzeug ein Fahrrad ist.

## Revendications

1. Procédé de fabrication d'un dispositif de mesure de déplacement (20), le procédé comprenant les étapes suivantes :
- fournir une base de support en forme de plaque (21) comportant deux parties de support (22, 23) séparées par un espace (24), la base de support (21) étant déformable de telle manière que les deux parties de support (22, 23) sont mobiles l'une par rapport à l'autre ;
- disposer un premier espace de logement rond (47) dans une première (22) desdites deux parties de support, au voisinage dudit espace (24), perpendiculaire à la base de support en forme de plaque ;
- disposer un deuxième espace de logement rond (48) dans une deuxième (23) desdites deux parties de support, au voisinage dudit espace (24), perpendiculaire à la base de support en forme de plaque, dans lequel une ligne virtuelle reliant le premier espace de logement (47) et le deuxième espace de logement (48) définit une direction d'orientation de capteur (X) ;
- fournir un système de capteur (27, 28) qui comprend une unité de capteur (28) et une unité de référence (27), dans lequel
- l'unité de capteur (28) comprend un logement de capteur (38) et un élément de mesure (37) monté dans le logement de capteur, et
- l'unité de référence (27) comprend un logement de référence (36) et un élément de référence de capteur (35) monté de manière excentrique dans le logement de référence ;
- insérer l'unité de référence (27) dans le premier espace de logement (47) avec une direction de déplacement d'insertion (Z) perpendiculaire à ladite direction d'orientation de capteur (X) et perpendiculaire à la base de support en forme de plaque ;
- placer l'unité de capteur (28) dans le deuxième espace de logement (48) avec une direction de déplacement d'insertion (Z) perpendiculaire à ladite direction d'orientation de capteur (X) et perpendiculaire à la base de support en forme de plaque ;
- ajuster le positionnement du système de capteur (27, 28) par rotation du logement de référence (36) autour de son axe de rotation correspondant dans le premier espace de logement rond (47) ;
- fixer l'unité de référence (27) et l'unité de capteur (28) dans leurs espaces de logement correspondants.

2. Procédé selon la revendication 1, dans lequel l'élément de mesure comprend un capteur à effet Hall et dans lequel l'élément de référence comprend un aimant.

3. Procédé selon l'une quelconque des revendications précédentes, dans lequel le premier espace de logement (47) et le deuxième espace de logement (48) sont ouverts vers ledit espace (24).

4. Procédé selon l'une quelconque des revendications précédentes, dans lequel l'unité de référence (27) et/ou l'unité de capteur (28) fait saillie depuis la partie de support correspondante (22, 23) dans ledit espace (24).

5. Procédé selon l'une quelconque des revendications précédentes, dans lequel l'étape d'ajustement du positionnement du système de capteur (27, 28) comprend l'étape consistant à déplacer radialement l'élément de référence par rapport au logement de référence.

6. Procédé selon la revendication 5, dans lequel l'étape de déplacement radial de l'élément de référence comprend l'étape consistant à insérer axialement un outil effilé dans le logement de référence.

7. Procédé selon l'une quelconque des revendications précédentes, dans lequel l'étape d'ajustement du positionnement du système de capteur (27, 28) est exécutée tout en surveillant un signal de sortie de l'unité de capteur (28), et dans lequel la position de rotation de l'unité de référence (27) est réglée de telle manière que le signal de sortie de l'unité de capteur (28) a une valeur cible prédéterminée.

8. Dispositif de mesure de déplacement (20) comportant un système de capteur (27, 28), le dispositif de mesure comprenant :
- une base de support en forme de plaque (21) comportant deux parties de support (22, 23) séparées par un espace (24), la base de support (21) étant déformable de telle manière que les deux parties de support (22, 23) sont mobiles l'une par rapport à l'autre ;
- dans lequel une première (22) desdites deux parties de support comporte un premier espace de logement rond (47), au voisinage dudit espace (24), perpendiculaire à la base de support en forme de plaque ;
- dans lequel une deuxième (23) desdites deux parties de support comporte un deuxième espace de logement rond (48), au voisinage dudit espace (24), perpendiculaire à la base de support en forme de plaque, dans lequel une ligne virtuelle reliant le premier espace de logement (47) et le deuxième espace de logement (48) définit une direction d'orientation de capteur (X) ;
- dans lequel le système de capteur (27, 28) comprend une unité de capteur (28) et une unité de référence (27), l'unité de capteur (28) comprend un logement de capteur (38) et un élément de mesure (37) monté dans le logement de capteur, et l'unité de référence (27) comprend un logement de référence (36) et un élément de référence de capteur (35) monté de manière excentrique dans le logement de référence ;
- dans lequel l'unité de référence (27) est placée dans ledit premier espace de logement (47) ;
- dans lequel l'unité de capteur (28) est placée dans ledit deuxième espace de logement (48) ;
- dans lequel le premier espace de logement (47) et l'unité de référence (27) ont une forme telle que l'unité de référence (27) a une liberté de rotation dans l'espace de logement correspondant (47) autour d'un axe de rotation (Z) perpendiculaire à ladite direction d'orientation de capteur (X).

9. Dispositif de mesure de déplacement selon la revendication 8, dans lequel l'élément de mesure comprend un capteur à effet Hall et dans lequel l'élément de référence comprend un aimant.

10. Dispositif de mesure de déplacement selon l'une quelconque des précédentes revendications 8 à 9, dans lequel le premier espace de logement (47) et le deuxième espace de logement (48) sont ouverts vers ledit espace (24).

11. Dispositif de mesure de déplacement selon l'une quelconque des précédentes revendications 8 à 10, dans lequel l'unité de référence (27) et/ou l'unité de capteur (28) fait saillie depuis la partie de support correspondante (22, 23) dans ledit espace (24).

12. Dispositif de mesure de force comprenant un dispositif de mesure de déplacement (20) selon l'une quelconque des revendications 8 à 11, le dispositif de mesure de force réagissant à une force extérieure par un déplacement des deux parties de support (22, 23) l'une par rapport à l'autre.

13. Dispositif d'ajustement pour ajuster la position d'un logement de référence (36) d'une unité de référence (27) d'un dispositif de mesure de déplacement (20) selon l'une quelconque des revendications 8 à 11, comprenant un support (61) ayant une surface supérieure (62), et un outil (63) s'étendant vers le haut depuis cette surface supérieure (62) et ayant un contour adapté pour s'engager dans ledit logement (36) ;
un moteur (66) pour faire tourner l'outil (63) ;
un dispositif de commande (65) pour commander le moteur (66) ;
une interface (64) couplée audit dispositif de commande (65) et adaptée pour recevoir un signal de sortie du dispositif de mesure de déplacement ;
dans lequel le dispositif de commande (65) est adapté pour surveiller le signal de sortie de mesure reçu fourni par le dispositif de mesure de déplacement et pour commander le moteur (66) de telle manière que l'outil (63) est amené dans une position de rotation où ledit signal de sortie de mesure reçu fourni par le dispositif de mesure de déplacement a une valeur souhaitée prédéterminée.

14. Véhicule conduit par un humain, comportant un moteur électrique auxiliaire pour fournir une énergie motrice d'assistance liée à l'énergie motrice fournie par le conducteur humain, le véhicule comprenant un système de mesure de force pour mesurer l'énergie motrice fournie par le conducteur humain, ledit système de mesure de force comprenant un dispositif de mesure de déplacement selon l'une quelconque des revendications 8 à 11 ou un dispositif de mesure de force selon la revendication 12.

15. Véhicule selon la revendication 14, le véhicule étant une bicyclette.
